# EUROPEAN PATENT APPLICATION

(11) **EP 4 001 787 A1**
(43) Date of publication of application: **25.05.2022**
(21) Application number: 20839779.4
(22) Date of filing: 10.04.2020
(51) Int. Cl.: F24F 7/02

(54) **ROTARY ROOF VENT**

(30) Priority: 17.07.2019 RU 2019122444
(71) Applicant: Ivanov, Dmitrij Stanislavich, 429951 Chuvashskaya Respublika (RU); Filippov, Aleksej Vladimirovich, 429951 Chuvashskaya Respublika (RU)
(72) Inventor: SEMENOV, Evgenij Igorevich, 428024 Chuvashskaya Respublika (RU); IVANOV, Dmitrij Stanislavich, 429951 Chuvashskaya Respublika (RU); FILIPPOV, Aleksej Vladimirovich, 429951 Chuvashskaya Respublika (RU)
(74) Representative: Ivanov, Ivan Nikolov
(86) International application number: PCT/RU2020/000173
(87) International publication number: WO 2021/010862

(57) **Abstract**

This utility model relates to smoke removal and exhaust ventilation devices with a radial flow, namely to radial (centrifugal) smoke removal and ventilation fans installed on the roofs of buildings, and providing removal of smoke, gases and air from the premises in the event of fire or gas contamination by force of the natural draft. The rotary deflector contains a base, a rim, blades, an axis, on which the rim with the blades rotate; the base, rims with the hubs, the cap and the blades are monolithically cast from plastic, the deflector contains two rims, which are installed into each other and connected by means of the lock consisting in three hub bosses, the blades are installed in the upper and lower rims, there are bearings to install upper and lower rims, the cap is made in the form of a hemisphere. The technical result consists in the improvement of technical and operational characteristics, as well as the expansion of the technical means stack. 3 files, 2 figures.

## Description

This utility model relates to smoke removal and exhaust ventilation devices with a radial flow, namely to radial (centrifugal) smoke removal and ventilation fans installed on the roofs of buildings, and providing removal of smoke, gases and air from the premises in the event of fire or gas contamination by force of the natural draft.

The rotary deflector is used for ventilation of residential and office premises, swimming pools, hangars, grain warehouses, stock breeding complexes, structural elements of the roof (roof trees, insulation, lathing or close ceiling), removal of gas and vapors from the shafts of high-rise apartment houses and to ensure properly controlled ventilation.

There is a deflector (SU 5224, Publ.: 30.04.1928) of a spherical shape, made up of separate curved strips, which by their lower ends are connected to a ring put on the pipe, and at the top are connected with a bolt.

At the technical level there is a radial roof fan (RU 2415305, publ.: 27.03.2011 Cert. No. 9), equipped with an impeller made of curved blades in the form of a spherical shell and mounted on the upper part of the chimney pipe, and a vertical axis on which the impeller rotates, vertical blades, protruding beyond the spherical zone, are installed on the upper base of the impeller using radial bars.

The most relevant in technical characteristics is a radial roof smoke and ventilating fan with an impeller (RU 2618416, publ. 03.05.2017 Cert. No. 13), which is made of curved blades in the form of a spherical shell, with a vertical axis on which the impeller rotates, on the upper base of which there are blades made of an aluminum body, and fluoroplastic hubs are also used.

Disadvantages of abovementioned models of turbodeflectors are:
1. Moisture and snow can easily get inside the deflector due to its open structure. All condensate flows down along the axis, and runs into hubs, where the bearings and moving metal parts of the deflector are located, which results in its quick disabling due to oxidation. Moisture got inside the bearing and on the rotating elements in winter freezes, and the deflector stops rotating until the thaw.
2. Duralumin and metal oxidizes as a result of contact even with no effect of corrosive environment.
3. There is snow on the top of the metal deflectors, which later turns into heavy ice, since the surface of the top is too flat and the snow cannot freely fall off it. This leads to the unbalance and breakdown of the installation seat, which disables the deflector itself.
4. Metal deflectors are heavy, which imposes additional load on the bearings and results in the reduction of its life. Secondly, the excess weight requires a stronger wind for rotation, which greatly reduces the overall useful life of the deflector.
5. Poor aerodynamic properties caused by the simple design of the blades of metal models. The disadvantage of these devices is that in slow wind speed, the impeller rotates slowly and does not provide sufficient fan performance or cannot rotate at all due to the great inertia of the impeller, which the starting torque created by a low wind cannot overcome. In addition, due to the imbalance and the resulting friction of parts, it is difficult for the deflectors to start rotating (a stronger wind is needed) and they cannot rotate for a long time. Over time, the deflector gets out of balance more and more, as a result decreasing the operating time.
6. Unreliable fastening of the spherical part to the base. Under the effect of high wind, due to bad rivets and thin metal the mounts are deformed at the location of connection of the head to the base. The deflector even can pull away from the installation seat.
7. Due to the design features many parts of metal deflectors are unbalanced and asymmetrical, since they are produced manually, today there is no any deflector fully produced at the factory. The level of workpieces accuracy is poor. Therefore, all assembled metal deflectors are also unbalanced and asymmetrical. The metal deflector always unbalanced, so after installation it does not rotate evenly. Over time, the deflector gets out of balance more and more, so the installation seat starts to break, as a result, this leads to the breakage of the deflector. If you rotate the seat separately, holding the deflector by the main body, you will see that the deflector is completely unbalanced in relation to the axle. All holes and gaps are unbalanced, the fastenings of the deflector parts are asymmetrical, and often loosen. The rivets are poorly fastened in the mounting holes and are made of too soft material, therefore they break very quickly from vibration and cannot keep the structure in its original form for a long time.
8. Due to the above-mentioned drawbacks, metal deflectors require frequent maintenance consisting in lubrication of bearings and moving parts, and as they are located on roofs and are difficult to access, this often becomes very problematic.
9. The time for manufacture is too long and complicated since there are many phases at the production stage and manual labor is mostly used in the general cycle. Also, due to the manual labor and use of metal in production, the prime cost is too high, aggravated by the fact that during the production of metal deflectors about 30% of the finished parts are rejected, which also greatly affects the prime cost and the production rate.
10. Due to the structural imbalance and further reduction in balance, the metal deflectors begin to make loud noise as a result of the friction of the metal parts.

The technical problem of the utility model is to manufacture a plastic turbo deflector with a design that takes into account all the disadvantages of the previous deflectors.

This problem is solved because the rotary deflector contains a base, a rim, blades, an axis, bearings, additionally contains one more rim, while both rims are manufactured as a single piece with the hubs and are installed in such a way that the hubs are inserted into each other by means of the hub bosses, thus forming an upper and lower rims in which the blades are installed, the cap is made in the form of a hemisphere, while the base, rims with the hubs, the cap and the blades are monolithically cast from plastic.
2. In comparison with the deflector in p.1 rotary deflector has the base equipped with the stiffening ribs and installation seat, enveloping the first ring by the second one, the installation seat has the hollow, the rim is equipped with the stiffening ribs and reinforced installation seat, enveloping the first ring by the second one, the cap is made with the stiffening ribs in the form of ring from the inner side, where the latches for connection to the rim are installed, on the top and on the bottom of the blade there are two horizontal stiffening ribs and two latches for connection to the rim.
3. In comparison with the deflector in p.1 rotary deflector has the base and rims with the hubs, the cap and blades are made of polypropylene.
4. In comparison with the deflector in p.1 the blade of this rotary deflector is 1 mm thick at the front and then it becomes thicker to 1.6 mm at the back of it, and then it suddenly reduces in thickness, forming a bevelled corner.

The technical result, provided by the given set of features, consists in the improvement of technical and operational characteristics, as well as the expansion of the technical means stack.

A rotary or active deflector (turbo deflector) is installed at the outlet of natural ventilation pipes and is powered by wind energy. It does not consume electricity, and, therefore, this device is economically viable.

The device is designed to extract exhaust air from the room to the outside. The operation of a rotary deflector is 2-4 times more efficient than the conventional one, thereby increasing the efficiency of the entire exhaust system.

The rotary deflector protects the ventilation duct from the penetration of atmospheric precipitation and foreign objects, protects the roof from the condensate formation by lowering the air temperature in the attic, prevents overheating of the indoor premises, reduces fat deposits and dustiness of the ventilation ducts, and decorates the duct exit.

The essence of the utility model is illustrated by drawings, which show:

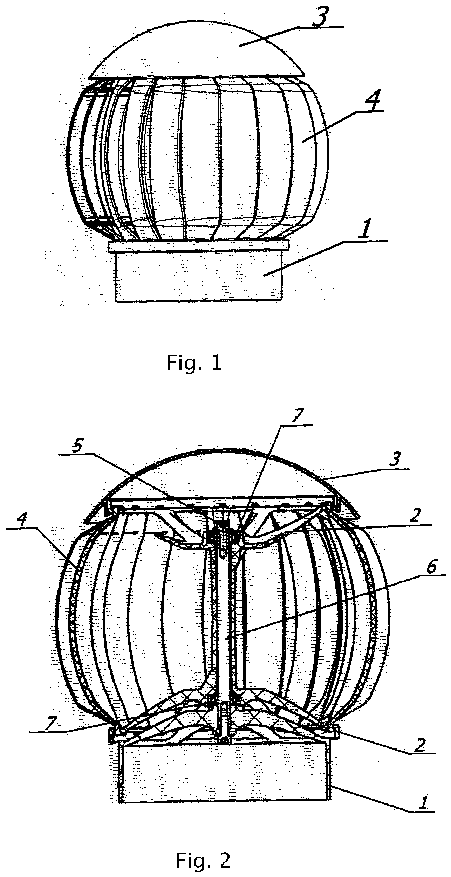

- Fig.1 -: General view of the device;

- Fig.2 -: Sectional view,
where
- 1 -: base
- 2 -: rim with the hub (upper and lower)
- 3 -: cap
- 4 -: blade (vane)
- 5 -: bolt
- 6 -: axis
- 7 -: bearing.

The rotary deflector (turbo deflector) consists of a base 1 and a turbine head, which always rotates in one direction, regardless of the direction of the wind. Base 1 is completely rigid, with six ribs, additionally fastened together in the middle by a common seat. As a result, the base is completely rigid and cannot be deformed.

An installation carcass (rims with hubs2) is attached to the base with a rod (axis 6), which ensures the strength and rigidity of the entire structure, the blades 4 and the aerodynamic cap 3 are attached to it.

There is one bearing 7 each at the top and at the bottom of the installation carcass, which ensures balancing and uniform rotating load.

The base 1 has six stiffening ribs, and installation seat with the hollow. The base is monolithic. As the part is molded, the base is perfectly even and symmetrical. Thanks to six stiffening ribs and reinforced central installation seat that envelops the first ring with a second one, the base is very strong. The installation seat has a hollow in the shape of a hub with a depth of 10 mm, so that the axis fits tightly and is ideally centered in the vertical line.

Rims 2 are monolithic. As the part is molded, the rims are perfectly even and symmetrical. Thanks to six stiffening ribs at the bottom and reinforced central installation seat that envelops the first ring with a second one, the rims are very strong. There are two rims in a rotary turbo deflector, installed in each other and fixed to each other by three bosses on each of the hubs 5 mm high. These bosses in the rims fit tightly into each other, which gives additional rigidity to the structure. The cast hub in the rim is reinforced by three stiffening ribs at the top. The hub in two rims is one piece that protects the metal axle from corrosive environments. The blades are tightly inserted into the upper and lower rims, thanks to twenty contracting round holes in each rim with protrusions on both sides, which securely fixes each blade. At the base of the rim, under the hub, there is an installation seat for a bearing 10 mm deep. The bearing seat is embedded into the base of the rim on the bottom, which reliably protects the bearing from aggressive environments and ensures a longer service life of the bearing.

The cap 3 is made in the form of a hemisphere, which does not allow snow and ice to accumulate on it and protects the structure against the imbalance. There are twenty aerodynamic stiffening ribs on the outside to improve the deflector rotation in low winds. Since the cap is monolithic, it is perfectly smooth, symmetrical, and very durable. There is also a stiffening rib in the form of ring on the inner side with six latches to connect the cap to the rim. It is much larger in size than in common deflectors, so it fulfills increased protective function for the inner part of the deflector, as well as the upper bearing, which reliably protects the inner part and the bearing from aggressive environments and ensures a longer life of the deflector.

The blade (vane) 4 is designed with the consideration of the aerodynamic properties of the aircraft wing and repeats its shape. The blade is 1 mm thick at the front and then it becomes thicker to 1.6 mm at the back of it, and then it suddenly reduces in thickness, forming a bevelled corner. This shape allows the wind to create more thrust, which is of great importance when the wind is very low. The blade has two horizontal (vertical in iron deflectors) stiffening ribs at the top and at the bottom, which gives additional strength to the structure. At the top and at the bottom each blade has two cylindrical latches with protrusions on both sides, which securely fixes each blade. Since the part is molded, the blade is perfectly even, symmetrical, and very durable.

The rotary (active) deflector is mainly made of the following materials: base, rim with the hub, cap, blade - of plastic or polypropylene, bolt and axle - of galvanized steel, bearing of metal.

The aerodynamic cap improves the aerodynamic properties of the device, protects against precipitation, which prevents the bearing from freezing in winter due to ingress of moisture.

Thanks to the above-described design of the deflector, the rigid framework, balance during rotation, noiselessness, improved operational characteristics (uniformity of rotation, rotation speed, rotation duration, minimum wind force to start rotation) and a much longer service life are achieved.

The device works as follows.

The wind, passing the blades (vanes), makes the head of the device move, thereby discharging air in the system and improving thrust. Since all parts are made of lightweight materials, wind speed of 0.5 meters per second is sufficient for the operation of the turbo deflector. Thus, the stronger the wind, the higher the power of the device. The turbo deflector provides autonomous operation and excludes reverse thrust.

Thus, the declared rotary deflector has the following properties (advantages):
1. The plastic deflector is completely molded and manufactured using molds and production lines, which virtually eliminates manual labor and guarantees perfect accuracy, symmetry and balance, which ensures uniform rotation. It also provides quick and easy production, no rejects, any uniform color by adding dye to raw materials, and, as a result, low production costs.
2. All parts are designed in such a way that the entire deflector is rigid, tightly assembled, does not loosen over time and is durable. There are stiffening ribs on the rims, cap, base and blades, blades are equipped with the cylindrical latches with protrusions on both sides. The construction of the base with the axle inserted into it is also aimed at structural rigidity and fine balance. Thanks to the abovementioned design of the deflector, the rigid framework, balance during rotation, noiselessness, improved operational characteristics and a much longer service life are achieved.
3. The deflector is designed in such a way to be the leader in the market in terms of rotating properties. This is ensured by the thoughtful aerodynamics of the blades and cap, fine balance of the structure and light weight. All this allows the proposed model to start rotating in a lower wind and rotate at a higher speed for longer time, which ultimately provides a greater cumulative total useful life of the deflector, and, accordingly, a much more efficient operation of the ventilation system as a whole.
4. The deflector is designed in such a way to protect all iron parts of the device (bearings, axis, bolts) against corrosive environments by mean of plastic. Upper bearings and bolt are covered by spherical cap, axis is covered by the rim hubs, lower bearing and bolt are embedded in the lower rim. This ensures the durability of the metal elements and, as a result, a longer service life of the deflector, since the plastic itself does not change its characteristics over time. In addition, the protection of metal parts ensures uninterrupted operation of the deflector throughout the winter, unlike metal samples, in which moisture freezes in winter and the deflector stops rotating until the thaw. It also eliminates the frequent maintenance of the deflector, consisting in lubrication of the bearings, which can be difficult to do on the roof. The replacement of metal parts in the presented model is very easy and the service life of the deflector can thus be increased several times (in metal samples, the bearings and axle cannot be replaced separately).

## Claims

1. As compared with the rotary deflector, consisting of the base, rim, blade, axis, bearings, the deflector has additional rim, both rims are monolithic and equipped with the hubs, they are installed in such a way that the hubs are inserted into each other by means of the hub bosses, thus forming an upper and lower rims in which the blades are installed, the cap is made in the form of a hemisphere, while the base, rims with the hubs, the cap and the blades are monolithically cast from plastic; the base has stiffening ribs and installation seat, enveloping the first ring by the second one, the installation seat has a hollow, the rim is equipped with the stiffening ribs and reinforced installation seat, enveloping the first ring by the second one, the cap is made with the stiffening rib in the form of ring from the inner side, where the latches for connection to the rim are installed, on the top and on the bottom of the blade there are two horizontal stiffening ribs and two latches for connection to the rim.

2. annulled

3. In comparison with the deflector in p.1 rotary deflector has the base and rims with the hubs, the cap and blades are made of polypropylene.

4. In comparison with the deflector in p.1 the blade of this rotary deflector is 1 mm thick at the front and then it becomes thicker to 1.6 mm at the back of it, and then it suddenly reduces in thickness, forming a bevelled corner.
